# EUROPEAN PATENT SPECIFICATION

(11) **EP 2 339 930 B1**
(45) Date of publication and mention of the grant of the patent: **07.12.2016**
(21) Application number: 09748572.6
(22) Date of filing: 13.10.2009
(51) Int. Cl.: A23L 7/117, A23L 33/21

(54) **HIGH FIBER COMPOUND COATING FOR FOOD PRODUCTS**
BALLASTSTOFFREICHE BESCHICHTUNG FÜR NAHRUNGSMITTELPRODUKTE
REVÊTEMENT EN COMPOSE RICHE EN FIBRES POUR PRODUITS ALIMENTAIRES

(30) Priority: 13.10.2008 US 104865 P
(43) Date of publication of application: 06.07.2011
(73) Proprietor: Kellogg Company, Battle Creek, MI 49016-3599 (US)
(72) Inventor: SALINAS BRAVO, Edith, Battle Creek, MI 49015 (US); FLAGET, Richard, Norris, Richland, MI 49083 (US)
(74) Representative: Monzón de la Flor, Luis Miguel
(86) International application number: PCT/US2009/060429
(87) International publication number: WO 2010/045182

(56) References cited:
- GB-A- 2 455 329
- US-A- 5 789 012
- US-A- 6 017 571
- US-A1- 2005 064 080
- US-A1- 2006 263 496
- US-A1- 2007 237 860

## Description

### TECHNICAL FIELD

This invention relates generally to high fiber food products and, more particularly, to high fiber compound coatings wherein the compound coating can be applied to or combined with a large variety of food products to provide a high level of fiber.

### BACKGROUND OF THE INVENTION

Health advocates have long promoted the need for consumers to increase their intake of dietary fiber, both soluble and insoluble. Often consumers are directed to increase their consumption of whole grains or foods that contain whole grains to increase fiber. Food manufactures have responded to this interest by offering more foods that have higher percentages of whole grains in them, however, use of whole grains is not always possible for all types of foods. Many foods do not lend themselves to inclusion of whole grains. As a result, food manufactures have also looked to other sources of fiber for inclusion in food products. The sources of fiber have included cereal brans, barley, psyllium, legumes, inulin, fructo-oligosaccharides (FOS), polydextrose, vegetable sources, fruit sources, nuts and flax seeds. These sources of fiber have been of some use, but they also present processing difficulties in food manufacture. As a result of the processing difficulties, the highest levels of fiber intermediate food materials that have previously been achieved are about 35% by weight. These high percentage fiber intermediate products are further processed to produce final food products having lower levels of fiber in them. In addition, this approach often requires that the manufacturing process for each food product be altered to produce a higher fiber version of the food product.

It is known in the state of the art the patent publication US 20070237860 wherein it is disclosed an edible adhesive coating for multi component food products to facilitate adhesion of particulate components such as grains or granola pieces to a base component such as a food-based center, and comprises sources of edible fat and polydextrose.

Another patent publication known in the state of the art is US2005064080 wherein it is disclosed a high fiber high protein ready-to-eat cereal.

It is known also in the state of the art the patent US5789012 wherein it is disclosed a product from sweet potatoes, cassava, edible aroids, amaranth, yams, lotus, potatoes and other roots, seeds and fruit, useful as dietary substitute for patients with food allergies.

Another known document is US2006263496 which discloses heat stable, fat-based confections and methods of making the same.

It is also known from the state of the art the patent US6017571 which discloses improved food products including cheeses, fruits, cookie materials, snack chips, and seasonings are provided which are highly shelf-stable and can be stored at room temperatures for long periods of time. The products have a total moisture content of less than about 5% by weight, and more preferably less than about 2% by weight, based on the total weight of the ingredients used in the product. The products disclosed in this patent have a water activity of from about 0.2-0.3 and an average particle size of from about 0.0006-0.0012 inches (15-31 microns).

### SUMMARY OF THE INVENTION

This invention provides a compound coating comprising dietary fiber, a fat portion, and optionally one or more of sugar, a flavor additive, an emulsifier, a surfactant, and a color having level of dietary fiber of 55% to 65 % by weight of the compound coating, and the compound coating has a particle size of 35 microns or less. The dietary fiber of the compound coating can include soluble fiber, insoluble fiber, or a combination of both types of fiber. The fine particle size of the compound coating provides improved mouthfeel and processability. The compound coating provides improved mouthfeel and processability, and has a rheology permitting use in typical coating spindles, waterfall systems, and bath systems.

The compound coating can be applied to a wide variety of food forms including cereals, granola, snack bars, snack foods, cookies, crackers, and other foods to provide a high fiber food product. In a specific example provided below, the compound coating is applied to wafer straws, but the invention is not so limited.

This invention also provides a process of forming the high fiber compound coating, including grinding components of the compound coating to a particle size of less than about 35 microns. The invention also provides a process of forming the high fiber food product with minimal disruption of existing food manufacturing processes.

These and other features and advantages of this invention will become more apparent to those skilled in the art from the detailed description of a preferred embodiment.

### DETAILED DESCRIPTION OF A PREFERRED EMBODIMENT

The present invention is directed toward a high dietary fiber compound coating material, a food product including the high fiber compound coating, and the processes of forming the same. The compound coating includes the dietary fiber in an amount of from about 55% to about 65% by weight of the compound coating and a particle size of 35 microns or less. In a specific example, the compound coating is applied to a rolled wafer straw-like product, however the compound coating can be applied to a wide variety of other foods.

The compound coating includes dietary fiber in an amount of from 55% to 65% by weight of the compound coating. Many sources of dietary fiber can be used in the present invention, including, but not limited to, polydextrose, short chain fructooligosaccharides (FOS), galacto-oligosaccharides (GOS), lignans, pectins, cereal brans, barley, psyllium, legumes, inulin, fructo-oligosaccharides, vegetable sources, fruit sources, nuts, and flax seeds. In the specific example below, the dietary fiber includes a combination of polydextrose and short chain fructo-oligosaccharides. There are many sources of polydextrose including the STA-LITE® III family of polydextrose from Tate & Lyle and the Litesse® Super Improved Polydextrose family from Danisco. The preferred short chain fructo-oligosaccharides are ones having a degree of polymerization of from 2 to 10 and more preferably from 3 to 5. A preferred source of short chain FOS is the product ACTILIGHT® available from Beghin-Say Company, France.

In addition to the dietary fiber, the compound coating includes various other ingredients. The compound coating is typically fat-based or includes a fat portion, such as cocoa butter or a cocoa butter equivalent of a blend of palm oil and shea nut oil, such as Choclin. The compound coating also typically includes sugar, surfactant or emulsifier, color, and flavor additives. The surfactant or emulsifier can include soy lecithin, preferably non-GMO soy lecithin. The flavor additives typically include citric acid, fruit powders, cocoa powder, and chocolate. However, the compound coating can be created in any flavor desired as known to those of ordinary skill in the art. The above-mentioned additional ingredients are only examples of ingredients that can be included in the compound coating along with the dietary fiber, and the compound coating can include fewer ingredients or other ingredients instead of or in addition to those listed. In a possible embodiment the compound coating comprises dietary fiber, a fat portion, and optionally one or more of sugar, a flavor additive, an emulsifier, a surfactant, and a color.

The compound coating also includes a particle size of 35 microns or less, and preferably 30 microns or less. The fine particle size of the high fiber compound coating provides improved mouthfeel and processability. The compound coating also has rheology permitting use of the compound coating in typical coating spindles, waterfall systems, and bath systems.

The compound coating is typically formed by:
- providing a mixture comprising dietary fiber, a fat portion, and optionally one or more of sugar, a flavor additive, an emulsifier, a surfactant, and a color
- mixing the components of the compound coating in a mixer to form a compound coating, wherein said dietary fiber is present in an amount of from 55% to 65 % by weight based on the total weight of the compound coating; and
- grinding or micro-grinding the compound coating to a particle size of 35 microns or less, and preferably 30 microns or less. The process of forming the compound coating can alternatively include grinding each of the components of the compound coating to a particle size of 35 microns or less, and then mixing the components together in the mixer. The process can also include agitating the components in the mixer and aeration.

The process of forming the compound coating typically occurs in a mixer, grinder, or dual purpose centrifugal batch refiner/conche, such as a McIntye Refiner/Conche machine. The mixing and the grinding of the compound coating occurs at a temperature of 55 to 65° Celsius. The process typically proceeds for about 12 hours, however shorter times are possible as long as the particle size is 35 microns or less, and preferably 30 microns or less. The process of forming the compound coating can include a continuous process, for example using a five roller system, as opposed to the batch process.

The compound coating can be applied to a food form to provide a high fiber food product. The food form typically includes ready-to-eat cereal, granola, snack bars, snack foods, cookies, crackers, or nuts, but can include other foods. The coating can be applied to the food form by spreading the coating onto the food form, spraying the coating onto the food form, rolling the food form in the coating, injecting the coating into the food form, pumping the coating through depositing spindles and onto the food form, and other methods.

In the following example, either a chocolate compound coating or a strawberry compound coating is produced as described below. The components of the chocolate compound coating and of the strawberry compound coating are shown in Table 1 in terms of percent by weight based on the total weight of the compound coating.

**TABLE 1**

| Component | Chocolate | Strawberry |
|---|---|---|
| Cocoa butter equivalent palm oil and shea nut oil blend | 28.00 | 28.00 |
| Polydextrose | 49.00 | 49.00 |
| Soy Lecithin | 0.40 | 0.40 |
| Polyglycerol polyricinoleate (PGPR) | 0.30 | 0.30 |
| Short chain FOS | 12.00 | 12.00 |
| Chocolate flavor | 0.60 | 0.00 |
| Dutched red cocoa powder | 9.00 | 0.00 |
| Granulated sugar | 0.70 | 8.75 |
| Citric acid anhydrous | 0.00 | 0.25 |
| Strawberry flavor | 0.00 | 0.40 |
| Freeze dried strawberry powder | 0.00 | 0.80 |
| Color | 0.00 | 0.10 |

The compound coatings are produced as follows. The fat portion of the compound coating, including the cocoa butter equivalent palm oil and shea oil blend and PGPR, are added to a dual purpose centrifugal batch refiner/conche followed by the dietary fibers and other non-fat components. The components of the compound coating are mixed together and ground until the compound coating achieves a particle size of 35 microns or less, and preferably 30 microns or less. During the mixing and grinding process, the compound coating is kept at a temperature of 55 to 65° Celsius. The total mixing and grinding time is approximately 12 hours, however shorter times are possible as long as the particle size is 35 microns or less.

In the present example, the high fiber compound coating is applied to snacking straws, also known as wafers. The wafers are formed by first creating a batter. The batter formulation for the wafer is given in Table 2, and the component amounts are given in wt % on a dry basis. The batter includes water in an amount of about 37.3% by weight of the batter.

**TABLE 2**

| Component | Percent by weight (dry basis) |
|---|---|
| Sugar | 23.404 |
| Short chain FOS | 9.0-11.0 |
| I Polydextrose | 5.0-7.0 |
| Fructose | 3.191 |
| Skim milk powder | 2.128 |
| Soft wheat flour | 53.191 |
| Vegetable oil | 0.532 |
| Vanilla | 0.213 |
| Salt | 0.213 |
| Lecithin | 0.638 |
| Glucose | 1.596 |
| Dried whole eggs | 0.002 |
| Sesame flour | 0.001 |
| Water | 0 |

The wafer batter is cooked and the compound coating is applied to the cooked wafer to form a high fiber food product. The high fiber food product includes a ratio of about 65% by weight wafer to about 35% by weight compound coating. The compound coating is applied to the wafer by rolling the wafer in the compound coating or pumping the compound coating through depositing spindles and onto the wafer. The actual cooking temperatures and times are adjusted as known to those of ordinary skill in the art. The use of wafer roller machines being somewhat art and science.

The final shape of the food product is straw-like and lined with the compound coating. The amount of dietary fiber in the compound coating combined with the dietary fiber added to the wafer formulation allows a serving of three straws totaling 35 grams to provide 10 grams of dietary fiber, which is about 40% of the U.S. government-recommended daily allowance. This process enables what would be considered a snack to provide a significant amount of fiber in a single serving. As noted above, the process can be adapted for use with a wide variety of food forms to provide a wide variety of high fiber food products.

The foregoing invention has been described in accordance with the relevant legal standards.

## Claims

1. A compound coating comprising dietary fiber, a fat portion, and optionally one or more of sugar, a flavor additive, an emulsifier, a surfactant, and a color;
said dietary fiber present in an amount of 55% to 65% by weight of said compound coating; and
a particle size of the compound coating of 35 microns or less,

2. A compound coating as set forth in claim 1 wherein said dietary fiber includes at least one of polydextrose, short chain fructo-oligosaccharides, galacto-oligosaccharides, lignan, pectins, cereal brans, barley, psyllium, legumes, inulin, fructo-oligosaccharides, vegetable sources, fruit sources, nuts, fax seeds, and combinations thereof.

3. A compound coating as set forth in claim 2 wherein said dietary fiber includes a combination of said polydextrose and said short chain fructo-oligosaccharides.

4. A compound coating as set forth in claim 1 including as said fat at least one of cocoa butter, a cocoa butter equivalent of a palm oil and shea nut oil blend, and polyglycerol polyricinoleate.

5. A food product comprising the compound coating according to any of preceding claims.

6. A food product as set forth in claim 5 wherein said food product includes a food form comprising at least one of wafers, ready-to-eat cereal, granola, snack bars, snack foods, cookies, crackers, and nuts.

7. A process of forming a compound coating comprising the steps of:
a.) providing a mixture comprising dietary fiber, a fat portion, and optionally one or more of sugar, a flavor additive, an emulsifier, a surfactant, and a color;
b.) mixing the ingredients to form a compound coating, wherein said dietary fiber is present in an amount of from 55% to 65% by weight based on the total weight of the compound coating; and
c.) grinding the compound coating at a temperature of from 55 to 65° C until a particle size of the compound coating is less than 35 microns.

8. A process of forming a compound coating as set forth in claim 7 wherein said grinding proceeds for 12 hours.

9. A process of forming a compound coating as set forth in claim 7 wherein the dietary fiber includes at least one of polydextrose, short chain fi-ucto-oligosaccharides, galacto-oligosaccharides, lignan, pectins, cereal brans, barley, psyllium, legumes, inulin, fructo-oligosaccharides, vegetable sources, fruit sources, nuts, flax seeds, and combinations thereof.

10. A process of forming a compound coating as set forth in claim 7 wherein said grinding occurs in a dual purpose centrifugal batch refiner/conche.

11. A process for forming a compound coating as set forth in claim 7 comprising the further step of applying the compound coating from step c) onto a food product.

12. A process of forming a compound coating as set forth in claim 11 wherein the food product includes at least one of wafers, ready-to-eat cereal, granola, snack bars, snack foods, cookies, crackers, and nuts.

## Patentansprüche

1. Belagmasse, die Ballaststoffe, einen Fettanteil und wahlweise einen oder mehrere Zucker, einen Geschmacksstoff, einen Emulgator, eine oberflächenaktive Substanz und einen Farbstoff umfasst;
wobei der besagte Ballaststoff in einer Menge von 55 Gew.-% bis 65 Gew.-% bezüglich der besagten Belagmasse vorliegt; und
die Belagmasse eine Teilchengröße von 35 Mikrometern oder weniger aufweist.

2. Belagmasse nach Anspruch 1, worin der besagte Ballaststoff mindestens einen der folgenden Bestandteile enthält: Polydextrose, kurzkettige Frukto-Oligosaccharide, Galakto-Oligosaccharide, Lignan, Pektine, Getreidekleie, Gerste, Flohsamen, Hülsenfrüchte, Inulin, Frukto-Oligosaccharide, pflanzliche Grundstoffe, Fruchtgrundstoffe, Nüsse, Flachssamen und Kombinationen davon.

3. Belagmasse nach Anspruch 2, worin der besagte Ballaststoff eine Kombination aus besagter Polydextrose und besagten kurzkettigen Frukto-Oligosacchariden enthält.

4. Belagmasse nach Anspruch 1, die als besagtes Fett mindestens einen der folgenden Stoffe enthält: Kakaobutter, Kakaobutteräquivalent bestehend aus einer Mischung aus Palmöl und Shea-Nussöl und Polyglycerol-Polyricinoleat.

5. Nahrungsmittelprodukt, das die Belagmasse nach einem der vorhergehenden Ansprüche umfasst.

6. Nahrungsmittelprodukt nach Anspruch 5, wobei das besagte Nahrungsmittelprodukt eine Nahrungsmittelform beinhaltet, die mindestens einen der folgenden Bestandteile umfasst: Waffeln, verzehrsfertige Cerealien, Müsli, Snackriegel, Snackartikel, Kekse, Cracker und Nüsse.

7. Verfahren zur Herstellung einer Belagmasse, das folgende Schritte umfasst:
a.) Bereitstellen einer Mischung, die Ballaststoffe, einen Fettanteil und wahlweise einen oder mehrere Zucker, einen Geschmacksstoff, einen Emulgator, eine oberflächenaktive Substanz und einen Farbstoff umfasst;
b.) Mischen der Bestandteile zur Herstellung einer Belagmasse, wobei der besagte Ballaststoff in einer Menge von 55 Gew.-% bis 65 Gew.-% bezüglich des Gesamtgewichts der Belagmasse vorliegt; und
c.) Mahlen der Belagmasse bei einer Temperatur von 55 bis 65 °C, bis die Teilchengröße der Belagmasse unter 35 Mikrometer liegt.

8. Verfahren zur Herstellung einer Belagmasse nach Anspruch 7, wobei das besagte Mahlen 12 Stunden dauert.

9. Verfahren zur Herstellung einer Belagmasse nach Anspruch 7, wobei der Ballaststoff mindestens einen der folgenden Bestandteile enthält: Polydextrose, kurzkettige Frukto-Oligosaccharide, Galakto-Oligosaccharide, Lignan, Pektine, Getreidekleie, Gerste, Flohsamen, Hülsenfrüchte, Inulin, Frukto-Oligosaccharide, pflanzliche Grundstoffe, Fruchtgrundstoffe, Nüsse, Flachssamen und Kombinationen davon.

10. Verfahren zur Herstellung einer Belagmasse nach Anspruch 7, wobei das besagte Mahlen in einer diskontinuierlichen Doppelfunktions-Zentrifugal-Conchiermaschine durchgeführt wird.

11. Verfahren zur Herstellung einer Belagmasse nach Anspruch 7, das den zusätzlichen Schritt des Auftragens der Belagmasse aus Schritt c) auf ein Nahrungsmittelprodukt umfasst.

12. Verfahren zur Herstellung einer Belagmasse nach Anspruch 11, wobei das Nahrungsmittelprodukt mindestens einen der folgenden Bestandteile enthält: Waffeln, verzehrsfertige Cerealien, Müsli, Snackriegel, Snackartikel, Kekse, Cracker und Nüsse.

## Revendications

1. Une composition d'enrobage comprenant des fibres alimentaires, une part de graisse, et éventuellement une ou plusieurs de sucre, un additif aromatisant, un émulsifiant, un surfactant, et une couleur ;
lesdites fibres alimentaires étant présentes à hauteur de 55% à 65% en poids de ladite composition d'enrobage ; et
une taille de particules de la composition d'enrobage étant de 35 microns ou inférieure.

2. Une composition d'enrobage telle que présentée dans la revendication 1, dans laquelle lesdites fibres alimentaires comprennent au moins l'un parmi :
polydextrose, fructo-oligosaccharides à courte chaîne, galactooligosaccharides, lignane, pectines, sons de céréales, orge, psyllium, légumineuses, inuline, fructo-oligosaccharides, sources de légumes, sources de fruits, fruits à coque, graines de lin, et leurs combinaisons.

3. Une composition d'enrobage telle que présentée dans la revendication 2, dans laquelle lesdites fibres alimentaires comprennent une combinaison dudit polydextrose et desdits fructo-oligosaccharides à courte chaîne.

4. Une composition d'enrobage telle que présentée dans la revendication 1, comprenant comme graisse au moins l'une parmi : beurre de cacao, un équivalent de beurre de cacao d'un mélange d'huile de palme et d'huile de noix de karité, et polyricinoléate de polyglycérol.

5. Un produit alimentaire comprenant la composition d'enrobage selon n'importe laquelle des revendications précédentes.

6. Un produit alimentaire tel que présenté dans la revendication 5, où ledit produit alimentaire comprend une forme d'aliment incluant au moins l'une parmi : gaufrettes, céréales prêtes à consommer, muesli, barres à grignoter, produits de grignotage, biscuits, crackers, et fruits à coque.

7. Un procédé de formation d'une composition d'enrobage comprenant les étapes consistant à :
a) fournir un mélange comprenant des fibres alimentaires, une part de graisse, et éventuellement une ou plusieurs de sucre, un additif aromatisant, un émulsifiant, un surfactant, et une couleur ;
b) mélanger les ingrédients pour former une composition d'enrobage, dans laquelle lesdites fibres alimentaires sont présentes à hauteur de 55% à 65% en poids sur la base du poids total de la composition d'enrobage ; et
c) moudre la composition d'enrobage à une température allant de 55 à 65°C jusqu'à ce qu'une taille de particules de la composition d'enrobage soit inférieure à 35 microns.

8. Un procédé de formation d'une composition d'enrobage tel que présenté dans la revendication 7, où la durée de ladite mouture est de 12 heures.

9. Un procédé de formation d'une composition d'enrobage tel que présenté dans la revendication 7, où les fibres alimentaires comprennent au moins l'un parmi : polydextrose, fructo-oligosaccharides à courte chaîne, galactooligosaccharides, lignane, pectines, sons de céréales, orge, psyllium, légumineuses, inuline, fructo-oligosaccharides, sources de légumes, sources de fruits, fruits à coque, graines de lin, et leurs combinaisons.

10. Un procédé de formation d'une composition d'enrobage tel que présenté dans la revendication 7, où ladite mouture est réalisée dans un raffineur/une conche à cuve centrifuge à double fonction.

11. Un procédé de formation d'une composition d'enrobage tel que présenté dans la revendication 7, comprenant l'étape supplémentaire consistant à appliquer la composition d'enrobage de l'étape c) sur un produit alimentaire.

12. Un procédé de formation d'une composition d'enrobage tel que présenté dans la revendication 11, où le produit alimentaire comprend au moins l'un parmi : gaufrettes, céréales prêtes à consommer, muesli, barres à grignoter, produits de grignotage, biscuits, crackers, et fruits à coque.
